# EUROPEAN PATENT SPECIFICATION

(11) **EP 4 562 804 B1**
(45) Date of publication and mention of the grant of the patent: **15.04.2026**
(21) Application number: 22754174.5
(22) Date of filing: 26.07.2022
(51) Int. Cl.: H04L 9/00

(54) **AUTHORIZED SIDE-CHANNEL MONITORING**
AUTORISIERTE SEITENKANALÜBERWACHUNG
SURVEILLANCE AUTORISÉE DE CANAL AUXILIAIRE

(43) Date of publication of application: 04.06.2025
(73) Proprietor: Telefonaktiebolaget LM Ericsson (publ), 164 83 Stockholm (SE)
(72) Inventor: LINDSKOG, Niklas, 224 72 Lund (SE); ENGLUND, Håkan, 226 48 Lund (SE); DUBROVA, Elena, 192 74 Sollentuna (SE)
(74) Representative: Ericsson
(86) International application number: PCT/IB2022/056860
(87) International publication number: WO 2024/023548

(56) References cited:
- US-B2- 10 810 310
- KHAN HAIDER ADNAN ET AL: "IDEA: Intrusion Detection through Electromagnetic-Signal Analysis for Critical Embedded and Cyber-Physical Systems", IEEE TRANSACTIONS ON DEPENDABLE AND SECURE COMPUTING, IEEE SERVICE CENTER, NEW YORK, NY, US, vol. 18, no. 3, 2 August 2019 (2019-08-02), pages 1150 - 1163, XP011854487, ISSN: 1545-5971, [retrieved on 20210513], DOI: 10.1109/TDSC.2019.2932736
- CHAWLA NIKHIL ET AL: "Machine Learning in Wavelet Domain for Electromagnetic Emission Based Malware Analysis", IEEE TRANSACTIONS ON INFORMATION FORENSICS AND SECURITY, IEEE, USA, vol. 16, 17 May 2021 (2021-05-17), pages 3426 - 3441, XP011858482, ISSN: 1556-6013, [retrieved on 20210603], DOI: 10.1109/TIFS.2021.3080510
- YI HAN RUTGERS UNIVERSITY MATTHEW CHAN RUTGERS UNIVERSITY NILS OLE TIPPENHAUER CISPA HELMHOLTZ CENTER FOR INFORMATION SECURITY ZAH: "Hiding in Plain Sight? On the Efficacy of Power Side Channel-Based Control Flow Monitoring", 9 November 2021 (2021-11-09), pages 1 - 18, XP061069547, Retrieved from the Internet <URL:http://www.usenix.org/system/files/sec22summer_han.pdf> [retrieved on 20211109]

## Description

### Technical Field

The present disclosure relates to a monitoring system in a computing environment, and more specifically to a side-channel emission monitoring system.

### Background

Side-channel emissions (leakage) are defined as non-intended information leakages from a device. The side-channel can consist of e.g., power consumption, electromagnetic (EM) emissions, timing information, thermal signatures, sound, and optical emissions. An attacker can utilize these leakages to extract sensitive information from a device, e.g., to extract a cryptographic key utilized to encrypt information. The side-channel emissions emitted by the device are not necessarily malicious and can also be used to monitor the state of the device. In these cases, an external monitor registers the side-channel leakage from the device and concludes if it behaves normally according to pre-defined criteria.

Several methods for side-channel monitoring exist, such as e.g. disclosed in US10810310B2 or "IDEA: Intrusion Detection through Electromagnetic-Signal Analysis for Critical Embedded and Cyber-Physical Systems", Khan et al, 10.1109/ TDSC.2019.2932736. In some solutions the monitoring device is oblivious to the internal state of the device and can only determine "normal" or "abnormal" side-channel leakage. In other solutions, the monitoring device can connect certain states or operations within the device to certain side-channel patterns. The latter may also detect "illegal" state transitions within an execution, i.e., where the execution flow of the device is abnormal.

An advantage of side-channel monitoring is that the device does not actively provide anything to the monitor, and the monitor may be physically separated from the device. This can make it difficult for an attacker to remain undetected, as an attack on a device might make it behave abnormally. This is beneficial in both high-security environments and as a complement to "classic" monitoring solutions.

Side-channel emissions can be a double-edged sword, however, as the information that can be collected to monitor the device can also enable an unauthorized device to extract sensitive information from the device. To prevent other devices from performing unauthorized monitoring of the device, the side-channel emissions can be masked by adding masking emissions to the regular side-channel emissions. These masking emissions can be generated based on, for example, the use of a Physically Unclonable Function (PUF).

PUFs are used to create a device-unique response by using implicit or explicit randomness. To create a PUF response, the PUF is fed a challenge, usually a binary string of a fixed length. This response can be used, e.g., for cryptographic or device identity purposes. The benefit of using a PUF is that two identical PUF implementations on different devices/components may result in different responses when fed the same challenges. Hence, the "unclonable" in PUF. Implicit randomness is unpredictable manufacturing differences in, e.g., semiconductor devices which can be exploited to create a device-unique response. Explicit randomness on the other hand means that the introduction of randomness requires extra steps during manufacturing or a later stage, e.g., at packaging.

A PUF can consist of one or several subfunctions, each contributes with a part of the PUF response. Examples of subfunctions can be:
1) Ring-oscillators, an uneven number of signal inverters in a ring which uses gate delay propagation as randomness source. The response is a comparison between two or more ring-oscillators where the number of oscillations at a given point is measured. The result can e.g., be the identifier of the fastest/slowest ring oscillator.
2) Uninitialized Static Random Access Memory (SRAM) memory cells, which have two possible states (0 and 1). Prior to power up, the cell is in neither state. At powerup, the cell stabilizes in one of the two states. The response is the entered state.
3) An arbiter might be regarded as a digital race condition between two or more signal paths on a chip where a so-called arbiter circuit identifies the winning signal. The paths might comprise several switch blocks, which can alter the signal paths. For example, the PUF response can be an identification of the winning signal.

The PUF response can be used to create a unique device identity or a device unique key, without having to store the key in e.g., Battery Backed RAM (BBRAM) or One Time Programmable (OTP) memory. Hence, it is much harder for an attacker to steal a key from a device using a PUF, as the key is never stored on device.

There are several types of PUFs, but they can generally be divided into two different categories: PUFs capable of generating/producing few CRPs and PUFs having a large set of CRPs. The former can produce several different responses by using different challenges as input. The latter only allows one or a few challenges. If the PUF only accepts a single challenge, the challenge is hard-coded or omitted.

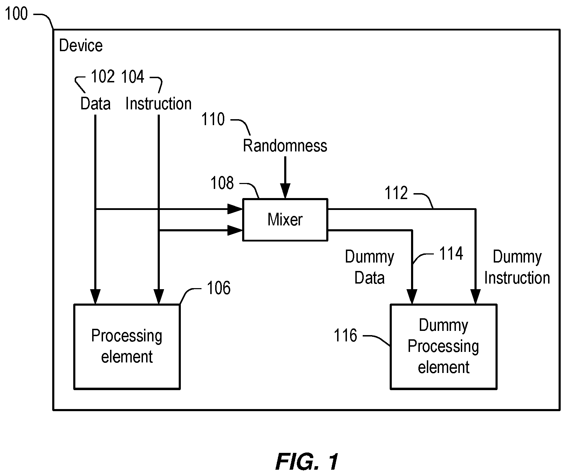

As illustrated in Figure 1, some contemporary side-channel solutions utilize randomness and optionally the state of the other processing element 106 to create instructions for the dummy processing element 116. Data 102 and instructions 104 are input into the other processing element 106, but also are mixed with noise or randomness 110 at a mixer 108 to produce randomized signals or dummy data 114 and dummy instructions 112 that are processed at the dummy processing element 116. The side-channel emissions of the dummy processing element 116 are therefore combined with the side-channel emissions of the other processing element 106, which effectively mask a hardware implementation of an encryption algorithm. This is good solution where the goal is to prevent side-channel leakage for all parties but cannot be used in combination with side-channel monitoring.

The problem with using the method illustrated in Figure 1 and other methods of masking the side-channel emissions is that, heretofore, it has been impossible to monitor the operations of the device that mask its emissions using an authorized monitor, as the masking emissions, intentionally cannot be distinguished from the regular, payload-based, side-channel emissions.

### Summary

Various embodiments disclosed herein provide for an authorized device monitoring system that can monitor the side-channel emissions of a device to determine the operational state of the device, while the device also masks the emissions to prevent unauthorized monitoring by third party devices. To accomplish this, deterministic noise is added to the regular payload side-channel emissions to create a combined side-channel emission that is received at an authorized monitoring device. The authorized monitoring device can then filter out the side-channel emissions that correspond to the deterministic noise in order to determine the operational state of the device under monitoring. The authorized monitoring device can be trained to both identify the deterministic noise and to correlate the payload side-channel emissions after the deterministic noise removal, with various operational states of the device under monitoring.

In an embodiment, a method can be implemented in an authorized monitoring device for monitoring side-channel emissions of a Device under Monitoring, DuM, the method including receiving a combined side-channel emission from the DuM, wherein the combined side-channel emission comprises a payload side-channel emission and a masking side-channel emission. The method can also include filtering the combined side-channel emission to determine the payload side-channel emission based at least in part on a known filtering characteristic of that removes the masking side-channel emission from the combined side-channel emission. The method can also include determining an operational state of the DuM based on the payload side-channel emission.

In an embodiment, an authorized monitoring device can include a memory that stores computer-executable instructions and a processor that executes the computer-executable instructions that cause the processor to receive a combined side-channel emission from the DuM, wherein the combined side-channel emission comprises a payload side-channel emission and a masking side-channel emission. The processor can also filter the combined side-channel emission to determine the payload side-channel emission based at least in part on a known filtering characteristic that removes the masking side-channel emission from the combined side-channel emission. The processor can also determine an operational state of the DuM based the payload side-channel emission.

In an embodiment, a method implemented in the DuM that is monitored by an authorized monitoring device can include, at a first period of time processing, using a first processor, one or more of payload data and payload instructions and transmitting first enumeration information about the payload data and instructions to the authorized monitoring device. At a second period of time, the method can include processing, using a second processor, masking inputs received from a deterministic/probabilistic function and transmitting second enumeration information about the masking inputs to the authorized monitoring device.

### Brief Description of the Drawings

The accompanying drawing figures incorporated in and forming a part of this specification illustrate several aspects of the disclosure, and together with the description serve to explain the principles of the disclosure.
Figure 1 illustrates an example of a device that uses random noise to mask side-channel emissions;
Figure 2 illustrates an example of a device and authorized monitoring device according to some embodiments of the present disclosure;
Figure 3 illustrates an example of a session key generator according to some embodiments of the present disclosure;
Figure 4 illustrates an example of a device and authorized monitoring device according to some embodiments of the present disclosure;
Figure 5 illustrates an example of a device and authorized monitoring device according to some embodiments of the present disclosure;
Figure 6 illustrates an example of a device and authorized monitoring device according to some embodiments of the present disclosure;
Figure 7 illustrates an example of a device and authorized monitoring device according to some embodiments of the present disclosure;
Figure 8 illustrates an example of a device and authorized monitoring device according to some embodiments of the present disclosure;
Figure 9 is a flowchart illustrating a method implemented in an authorized monitoring device in accordance with one embodiment of the present disclosure;
Figure 10 is a flowchart illustrating a method implemented in an authorized monitoring device in accordance with one embodiment of the present disclosure;
Figure 11 is a flowchart illustrating a method implemented in a device under monitoring during a training phase in accordance with one embodiment of the present disclosure; and
Figure 12 is an exemplary graph depicting measurements of side-channel emissions in accordance with some embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the present disclosure and will recognize applications of these concepts not particularly addressed herein. It should be understood that these concepts and applications fall within the scope of the present disclosure.

Various embodiments disclosed herein provide for an authorized device monitoring system that can monitor the side-channel emissions of a device to determine the operational state of the device, while the device also masks the emissions to prevent unauthorized monitoring by third party devices. To accomplish this, deterministic noise is added to the regular payload side-channel emissions to create a combined side-channel emission that is received at an authorized monitoring device. The authorized monitoring device can then filter out the side-channel emissions that correspond to the deterministic noise in order to determine the operational state of the device under monitoring. The authorized monitoring device can be trained to both identify the deterministic noise and to correlate the payload side-channel emissions after the deterministic noise removal, with various operational states of the device under monitoring.

Apart from the regular "payload side-channel emissions," deterministic noise is added to create "combined side-channel emissions." The aim is for the authorized monitors to know the deterministic noise and thereby be able to extract the payload side-channel emissions, whilst non-authorized monitors cannot. Furthermore, the deterministic noise would not be repeated between sessions, as this may enable unauthorized monitors to determine how to filter it out.

The monitoring device performs a first training on either the Device Under Monitoring (DuM) or on a plurality of devices of the same kind. During this training, the DuM activates circuits and programs associated with normal DuM behavior and may additionally enumerate its behavior to the monitoring device. The monitoring device observes the side-channel emissions emitted and uses it to link side-channel emissions to DuM states.

The monitoring device can also perform a second training on either the DuM or on a plurality of devices of the same kind. During this training, the DuM runs additional circuits which is used to produce deterministic noise. The DuM further enumerates the current state of the masking circuits during this process. The monitoring device can observe the side-channel emissions and configure a filtering module. During either of the training phases or stages, the monitoring device also sets up a shared secret with the DuM. In some embodiments, the shared secret may also be setup after the training phases.

After training, the monitoring device may actively check the status of the DuM by observing the combined side-channel emissions. The DuM utilizes a seed and the shared secret to set up a generation of session-unique deterministic noise. The seed is shared with the monitoring device at startup of the DuM. Knowing the seed and the secret, the filtering module removes the deterministic noise before the status module uses the payload side-channel emissions to determine the state of the DuM.

An advantage of the authorized monitoring system disclosed herein is that only authorized monitors determine the state of a device using side-channel emissions. This enables a situation where side-channel emissions can be utilized for monitoring without exposing any sensitive information to unauthorized parties.

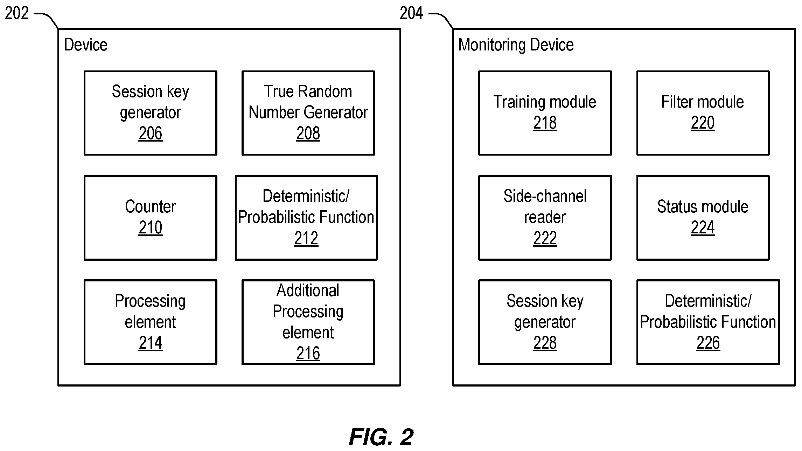

Turning now to Figure 2, illustrated are examples of a device 202 and an authorized monitoring device 204 according to some embodiments of the present disclosure. The device (or DuM) 202 includes a session key generator 206, a true random number generator 208, a counter 210, a deterministic or probabilistic function 212, a processing element 214, and an additional processing element 216 (similar to dummy processing unit 116).

The true random number generator 208 generates nonces to be used by the session key generator 206. The deterministic or probabilistic function 212 and 226 generate a stream of pseudo-random bits to be utilized by the additional processing element 216 or by the filter module 220. Deterministic or probabilistic functions 212 and 226 may be embodied by a PRNG, a hash function, a MAC function, a PUF, or a KDF. The session key generator 206 generates a unique key for each session.

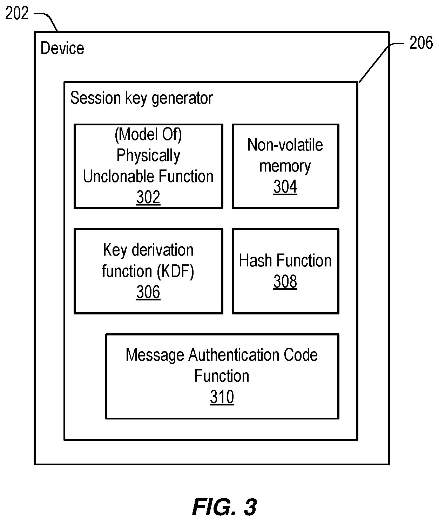

Turning now to Figure 3, illustrated is an example of the session key generator 206 with some additional modules, including a model of a Physically Unclonable Function (PUF) 302, a non-volatile memory 304, and a plurality of optional One-Way Functions (OWF), namely: a Key Derivation Function (KDF) 306, a hash function 308, and a Message Authentication Code (MAC) function 310. The PUF 302 may also be a mathematical representation of a physical PUF, so called PUF model. E.g, the monitoring device may store a PUF model present on the DuM. This gives the monitoring device the ability to produce the same response to a challenge as the DuM. The session key generator 206 generates a unique key for each session based on a secret (shared with the authorized monitoring device 204) and, optionally, a nonce generated by the true random number generator 208 as an input to one or more of the OWFs 306, 308, and/or 310. The secret may be generated by the PUF 302 or stored in the non-volatile memory 304. The session key generator 228 can also include such functions as included in the session key generator 206.

Returning to Figure 2, the authorized monitoring device 204 can include a training module 218, a filter module 220, a side-channel reader 222, a status module 224, a deterministic or probabilistic function 226, and a session key generator 228.

In an embodiment, the DuM 202 can be any computing device that processes data and or instructions to perform operations, and in which it is preferable that unauthorized parties are not able to determine operational states of the DuM 202 and to avoid private or encrypted data from being ascertained. To prevent the side-channel attacks, the DuM 202 uses the additional processing element 216 to create deterministic "noise" that masks the payload side-channel emissions that are caused by processing element 214. The modules 206-212 are used by the DuM 202 to provide information to the authorized monitoring device 204 that allows the authorized monitoring device 204 (which can be a separate device from the DuM 202) to monitor the masked side-channel emissions from DuM 202, filter out the masking noise, and determine the operational state of the processing element 214 and DuM 202 while preventing an unauthorized user(s) and/or devices from determining the operational state of the DuM 202.

The session key generator 228 generates a session key based on a shared secret (shared with the DuM 202) and, optionally, a nonce sent from the DuM 202.

Side-channel reader 222 detects and receives the side-channel emissions, so-called "traces" from the DuM. It may comprise, for example, an EM probe, photodetector, thermal sensor, acoustic sensor, or a voltage shunt, as well as post-processing circuitry.

The deterministic or probabilistic function 226 generates a stream of pseudo-random bits that are used to determine the current state of the additional processing element 216. In some cases, the function may use its last output as input to generate the next output. The deterministic or probabilistic function 226 is ideally of a type which is resistant to reverse-engineering the state by observing the output.

The training module 218 is used during the training phases to configure the filter module 220 and status module 224 respectively. The training module 218 takes input from the side-channel reader 222 and external data enumerating (providing context or data about) the traces.

The filter module 220 is used during the operations phase to remove the deterministic noise from the combined side-channel emissions received from the side-channel reader. The filter module 220 utilizes one or several of a machine learning model, template/pattern database, correlation analyzer, etc. to determine how to filter out the deterministic noise from the combined side-channel emission.

The status module 224 is used during the operations phase to determine the state of the DuM 202 using the output from the filter module 220. The status module 224 can be configured during the filter training stage. The status module 224 utilizes one or more machine learning models, a pattern database, etc. to determine how to determine the state of the DuM from the filtered signal. Each state may correlate to e.g., a certain instruction, a code segment, output from gate arrays.

In one exemplary embodiment, the filter module 220 and the status module 224 can utilize a neural network that is trained based on training data received during a filter training stage or a payload training stage.

A possible architecture of neural networks which can be used for authorized side-channel monitoring is a Multilayer Perceptron (MLP) architecture shown in Table 1.

Its input size, n, is given by the number of data points in the training data. Its output size, m, is given by the number of classes which are required to be distinguished. For example, if the network is predicting byte values, e.g., corresponding to opcodes in a processor, and one-hot-encoding of outputs is used, then m = 256. During training, NAdam optimizer with a learning rate of 0.001 and a numerical stability constant epsilon =1e-08 can be used. Categorical cross-entropy can be used as a loss function. The training can be performed for, for instance, 100 epochs with a batch size of 128. It is common to use 70% of the training set for training and 30% for validation.

**Table 1**

| Layer Type | (Input, output) shape |
|---|---|
| Batch Normalization 1 | (n, n) |
| Dense 1 | (n,1024) |
| Batch Normalization 2 | (1024,1024) |
| ReLU | (1024,1024) |
| Dense 2 | (1024,512) |
| Batch Normalization 3 | (512,512) |
| ReLU | (512,512) |
| Dense 3 | (512,256) |
| Batch Normalization 4 | (256, 256) |
| ReLU | (256, 256) |
| Dense 4 | (256, m) |
| Softmax | (m,m) |

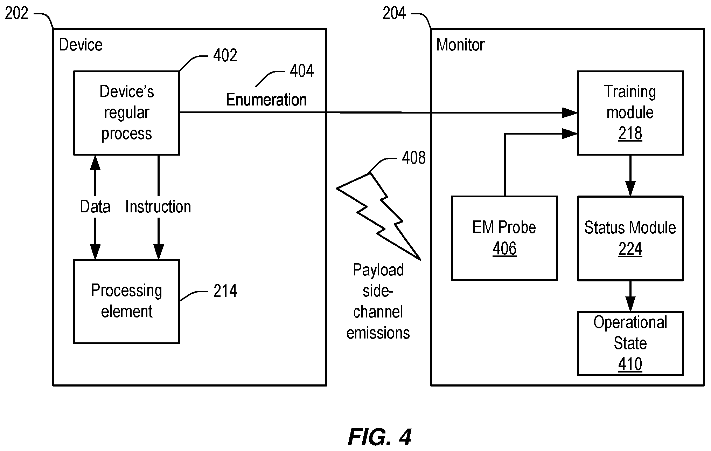

Turning now to Figure 4, illustrated is an example of a device 202 and authorized monitoring device 204 according to some embodiments of the present disclosure.

The embodiment in Figure 4 depicts an embodiment of a DuM 202 and authorized monitoring device 204 in a payload training stage, where the status module 224 is trained to correlate payload side-channel emissions 408 with operational states 410 of the DuM 202.

It is to be appreciated that in the embodiments shown in Figures 4-8, the side-channel reader module 222 is depicted as an electromagnetic (EM) probe 406. This is merely one representative example, and in other embodiments, the side-channel emission sensor can be any of an EM probe, photodetector, thermal sensor, acoustic sensor, or a voltage shunt as well as post-processing circuitry. It is also to be appreciated that in one or more embodiments, several different side-channel emissions can be used, e.g., a combination of thermal and EM emissions can be detected by one or more sensors on the authorized monitoring device 204. It is also possible to combine several side-channels of the same kind, e.g., using two different EM probes to capture side-channel emissions in different directions.

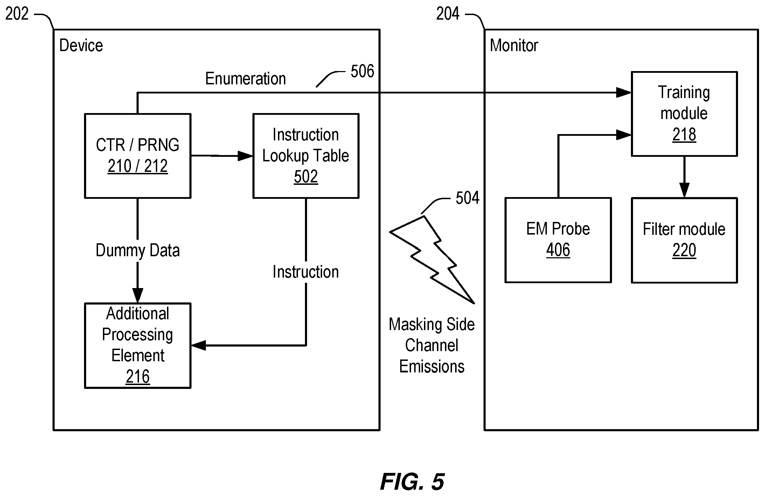

Further, in the embodiments shown in Figures 5, 6, and 8, the deterministic or probabilistic functions 212 and 226 are depicted as PRNGs. This is merely one representative example and in other embodiments, the deterministic or probabilistic function may be any of a PRNG, a hash function, a MAC function, a PUF and a KDF.

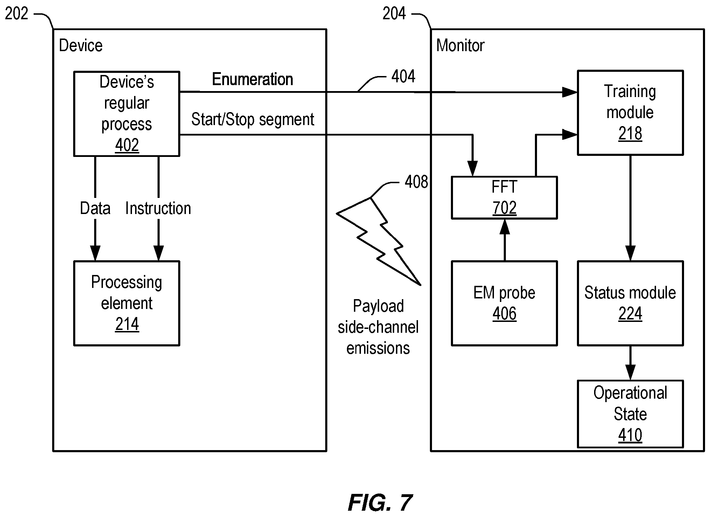

During the payload training stage, the DuM 202 executes the regular process of the device at 402, which can include the processing element 214 executing instructions and processing data as part of the DuM 202's regular operational process. During the execution, the EM probe 406 in the authorized monitoring device 204 reads the payload side-channel emissions 408 and supplies these to the training module 218. The EM probe 406 may sample the payload side-channel emissions 408 for a determined period of time and registers the strength of the emissions or other attributes (wavelength, frequency, pattern, etc.) for each unit of time. In some embodiments, the payload side-channel emissions 408 are transformed from a time domain to a frequency domain (*See* Figure 7).

The DuM 202 can send enumeration information 404 to the monitoring device that can provide current information about the operational state 410 of the DuM 202. The enumeration information 404 can include the instructions/data that are being executed by the processing element 214 or be code segments that are being executed. The training module 218 uses the enumeration information 404 with the data from the EM probe 406 as input into a status machine learning model, to store in a database for correlating emissions and states, or both. This configuration (i.e., the known status model and/or the database) is utilized by the status module 224 in the operation phase to determine the state of DuM 202 from analyzing the payload side-channel emissions 408 which results in the operational state 410 of the DuM 202.

Turning now to Figure 5, illustrated is an example of a device 202 and authorized monitoring device 204 according to some embodiments of the present disclosure.

The embodiment in Figure 5 depicts an embodiment of a DuM 202 and authorized monitoring device 204 in a filter training stage. During the filter training stage, the DuM 202 executes the dummy data generated by the counter 210 and or deterministic/probabilistic function 212 and instructions from the instruction lookup table 502. The masking side-channel emissions 504 generated by the additional processing element 216 can then be received by the EM probe 406 (in other embodiments, different sensors can also receive side-channel emissions other than EM radiation). These masking side-channel emissions 504 are supplied to the training module 218, together with a received enumeration information 506 for each state (e.g., instruction and data) of the additional processing element 216.

The training module 218 uses the emissions to determine the deterministic noise of the DuM 202 and to set up the filter module 220. The training module 218 uses these samples as an input to a machine learning model, to store in a database for correlating emissions and states, or both. The configuration (i.e., model and/or the database) is utilized by the filter module 220 during the operation phase, to enable it to filter out the masking side-channel emissions 504 from the combined side-channel emissions.

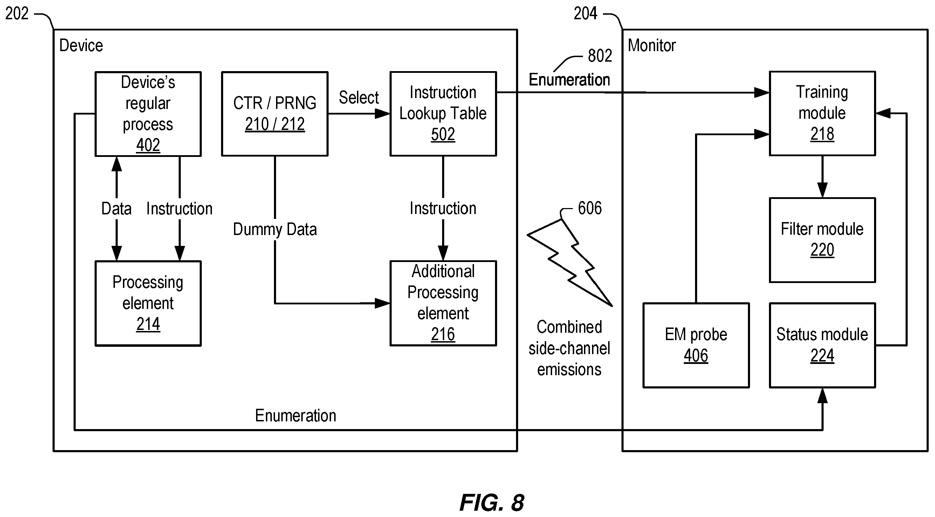

By knowing the enumeration information 506 and the starting point for the masking side-channel emissions, the filter module 220 will be able to determine the deterministic noise. For example, the filter module 220 will be able to answer the question "what deterministic noise was generated when the additional processing element 216 received input X?" In some embodiments, an additional, third training phase is also performed (*See* Figure 8).

During either of these training phases shown in Figure 4 or Figure 5, the DuM 202 and authorized monitoring device 204 also exchange a shared secret, such as a symmetric key. The symmetric key may be generated by a PUF 302 on the DuM 202. It may also be programmed in non-volatile memory 304 in the DuM 202.

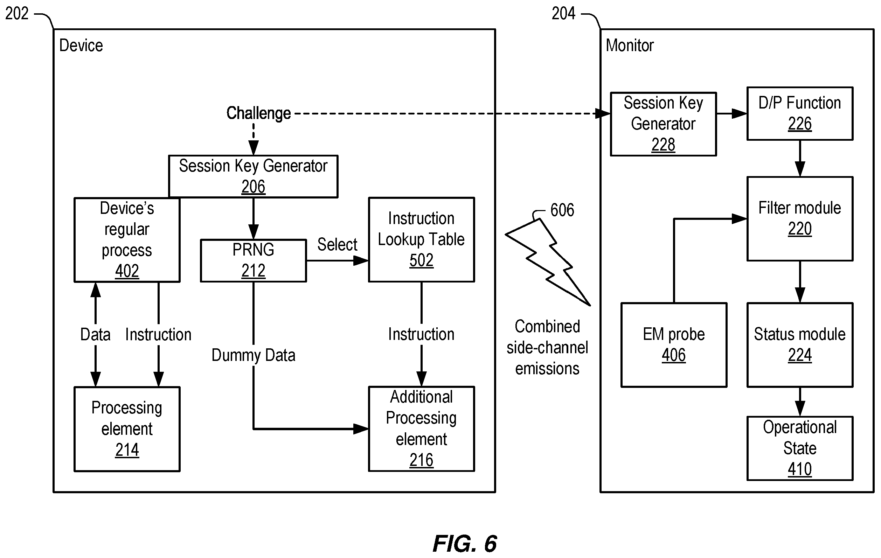

Turning now to Figure 6, illustrated is an example of a device 202 and authorized monitoring device 204 during an operational phase according to some embodiments of the present disclosure.

In an embodiment, the processing element 214 processed data and instructions based on the device's regular process 402 which results in payload side-channel emissions 408. At the same time, the additional processing element 216 processes dummy data and/or instructions to create the masking side-channel emissions 504, which together with the payload side-channel emissions 408 results in combined side-channel emissions 606.

The DuM 202 randomly selects a seed and/or challenge which is combined with the shared secret in the session key generator 206 to create the session key. The session key may e.g., be generated by supplying the challenge to a PUF and feeding the output to a KDF or by combining a value stored in NVM with a seed and feed both of these to a hash function. The session key is used as starting point for the deterministic/probabilistic function 212 which in turn is used to select instructions from the instruction lookup table 502 and data for the noise generation at the additional processing element 216.

The DuM 202 can supply the seed and/or challenge to the authorized monitoring device 204 which based on the shared secret shared with the authorized monitoring device 204 earlier, utilizes the session key generator to create the session key at authorized monitoring device 204 which is utilized by the deterministic/probabilistic function 226 to create the same masking input comprising the pseudo-random numbers as created by deterministic/probabilistic function 212. The output of the deterministic/probabilistic function 226 is fed into the filter module 220 which based on the machine learning model trained during the filter training stage and based on the deterministic/probabilistic function 226 output, filters the combined side-channel emissions 606 received by the EM probe 406 to identify the payload side-channel emissions 408. The filter signal corresponding to the payload side-channel emissions 408 is provided to the status module 224 which then determines the operational state 410 of the DuM 202 based on the status model trained during the payload training stage.

It is to be appreciated that an unauthorized monitoring device which does not have the shared secret is not able to correctly determine the starting point of the deterministic/probabilistic functions 212/226 and cannot filter out the noise. This statement holds even if the unauthorized monitoring device has the same configuration for the filter and status module as the authorized monitoring device 204.

In an embodiment, the secret used by the session key generator 206 is constant, e.g., generated by a PUF 302 (using a constant challenge) or written in non-volatile memory 304 and at the authorized monitoring device 204 as well.

However, in one embodiment, the secret is a PUF 302. The monitoring device at PUF model 604 has knowledge of several PUF challenge-response pairs and is thereby able to derive the secret by knowing the challenge used by the PUF 302. This can either be done by extracting multiple challenge-response pairs during the training phase or by the authorized monitoring device 204 via the PUF model 604 mathematically modelling/representing the PUF 302. The latter makes it possible for the authorized monitoring device 204 to calculate any unseen challenge-response pair for the PUF 302.

Turning now to Figure 7, illustrated is an embodiment where instead of monitoring in the time domain, a transform, such as, for example, the Fast Fourier Transform (FFT) 702 can be applied to convert time domain signals received by the EM probe 406 and from the device 202 into the frequency domain at FFT 702 on the authorized monitoring device 204. This embodiment can be used in some situations where it may be advantageous to use the frequency domain. The training module 218 receives the signal translated to frequency domain and sets up the status module 224 and filter module 220 accordingly.

Figure 8 depicts an embodiment where the authorized monitoring device 204 can be trained in an optional third training stage. In the embodiment shown in Figures 4-6, it is assumed that the payload side-channel emissions 408 and the masking side-channel emissions 504 are additive and, therefore, the combined side-channel emissions 606 are therefore simply the addition of the two-component side-channel emissions, thereby making it possible for the filter module 220 to filter away the masking side-channel emissions 504 completely. It is to be appreciated, however, that this may not always be the case, and that in some embodiments, the combined side-channel emissions 606 may not strictly be the addition of the two-component side-channel emissions, and that there could be some non-linearities involved or additional perturbations that are difficult to predict.

Therefore, the authorized monitoring device 204 can undergo an additional training phase. The training module 218 is further exposed to the combined side-channel emissions 606 and corresponding enumeration information 802 is provided to the training module 218 from the DuM 202 to enable the filter module 220 to better understand how the signals affect each other when combined. In yet another embodiment, the extra training phase may be performed at the filter training stage. The authorized monitoring device 204 can observe the payload side-channel emissions 408 and the combined side-channel emissions 606 during the respective training phases.

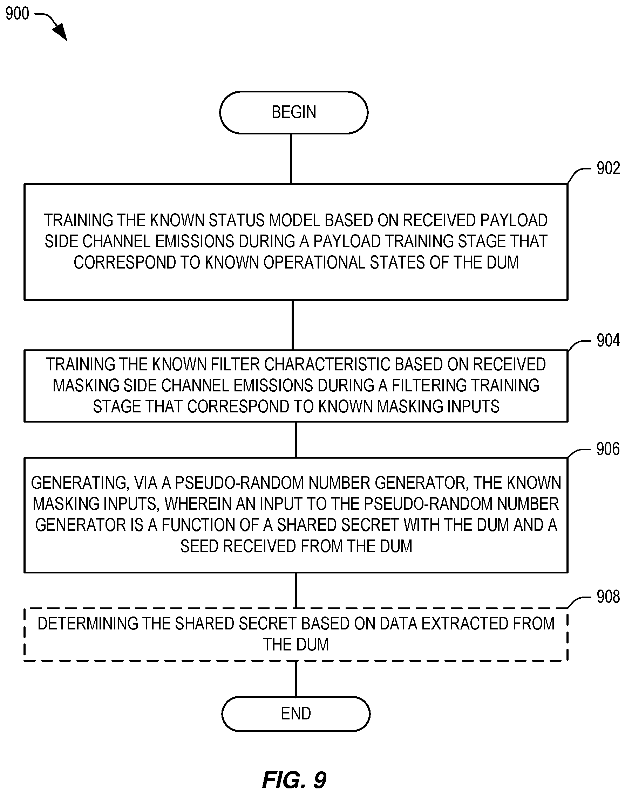

Figure 9 is a flowchart illustrating a method 900 performed by the authorized monitoring device 204 for monitoring side-channel emissions of a DuM 202 in accordance with one embodiment of the present disclosure. Optional steps are represented by dashed lines/boxes.

Method 900 begins at 902 where the authorized monitoring device 204 trains the status model based on received payload side-channel emissions 408 during a payload training stage that correspond to known operational states of the DuM 202. During the payload training stage, the DuM 202 executes the regular process of the device at 402, which can include the processing element 214 executing instructions and processing data as part of the DuM 202's regular operational process. During the execution, the EM probe 406 in the authorized monitoring device 204 reads the payload side-channel emissions 408 and supplies these to the training module 218. The training module 218 uses the enumeration information 404 received from the DuM 202 with the data from the EM probe 406 as input into a status machine learning model, to store in a database for correlating emissions and states, or both.

At 904 the authorized monitoring device 204 trains the filtering model or the known filtering characteristic based on received masking side-channel emissions 504 during a filtering training stage that correspond to known masking inputs (e.g., the numbers generated by deterministic/probabilistic function 212). The masking side-channel emissions 504 are supplied to the training module 218, together with a received enumeration information 506 for each state (e.g., instruction and data) of the additional processing element 216.

The training module 218 uses the emissions to determine the deterministic noise of the DuM 202 and to set up the filtering module 220. The training module 218 uses these samples to use as an input to a machine learning model, to store in a database for correlating emissions and states, or both.

At 906 the authorized monitoring device 204 generates, via a deterministic or probabilistic function 226, the known masking inputs, wherein an input to the deterministic/probabilistic function 226 is a function of a shared secret shared with the DuM 202 and a seed received from the DuM 202. The output of the deterministic or probabilistic function 226 is fed into the filter module 220 which based on the machine learning model trained during the filter training stage and based on the deterministic or probabilistic function 226 output, filters the combined side-channel emissions 606 received by the EM probe 406 to identify the payload side-channel emissions 408.

At 908 the authorized monitoring device 204 optionally determines the shared secret based on data extracted during the filter training stage. This can, e.g., for a PUF be done by extracting multiple challenge-response pairs during the training phase by the authorized monitoring device 204 to derive a PUF model for the DuM PUF in the session key generator 206, mathematically modelling the PUF 302 in the DuM session key generator 206. The latter makes it possible for the authorized monitoring device 204 to calculate any unseen challenge-response pair for the PUF 302.

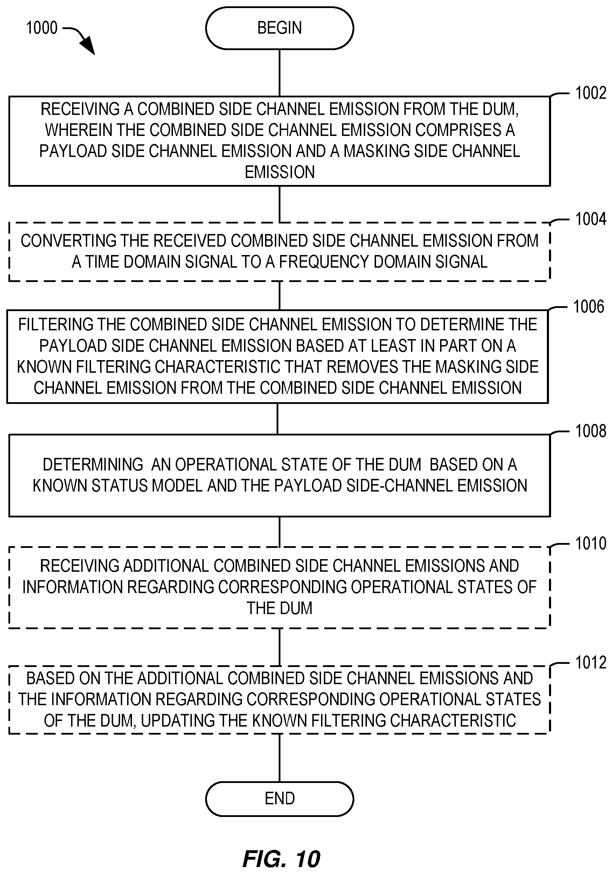

Figure 10 is a flowchart illustrating a method 1000 performed by the authorized monitoring device 204 for monitoring side-channel emissions of a DuM 202 in accordance with one embodiment of the present disclosure. Optional steps are represented by dashed lines/boxes.

Method 1000 begins at 1002 where the authorized monitoring device 204 receives a combined side-channel emission from the DuM 202, wherein the combined side-channel emission 606 comprises a payload side-channel emission 408 and a masking side-channel emission 504. The combined side-channel emission 606 could be an EM emission in some embodiments, it could be acoustic, thermal, voltage, vibration, timing, or other type of emission, or combinations thereof, in other embodiments.

At 1004 the authorized monitoring device 204 optionally converts the received combined side-channel emission 606 from a time domain signal to a frequency domain signal (e.g., via FFT 702).

At 1006 the authorized monitoring device 204 filters the combined side-channel emission 606 to determine the payload side-channel emission 408 based at least in part on a filtering model or known filtering characteristic that removes the masking side-channel emission from the combined side-channel emission. The filtering model could be trained during the filter training stage by the training module 218 and the filter module 220.

At 1008 the authorized monitoring device 204 determines an operational state 410 of the DuM 202 based on the payload side-channel emission. In some embodiments, the authorized monitoring device 204 can also determine the operational state 410 of the DuM 202 based on a known status model. The status model could be trained during the payload training stage where the authorized monitoring device 204 learned to correlate payload side-channel emissions 408 to enumerated operational states of the DuM 202.

At 1010 the authorized monitoring device 204 optionally receives additional combined side-channel emissions 606 and information regarding corresponding operational states of the DuM 202. The additional combined side-channel emissions 606 and information regarding the operational state of the DuM 202 could be received during an additional training phase when the authorized monitoring device 204 learns to account for any non-linearities and unexpected inputs.

At 1012 the authorized monitoring device 204 based on the additional combined side-channel emissions 606 and the information regarding corresponding operational states of the DuM 202 received at step 1010, optionally updates the filtering model.

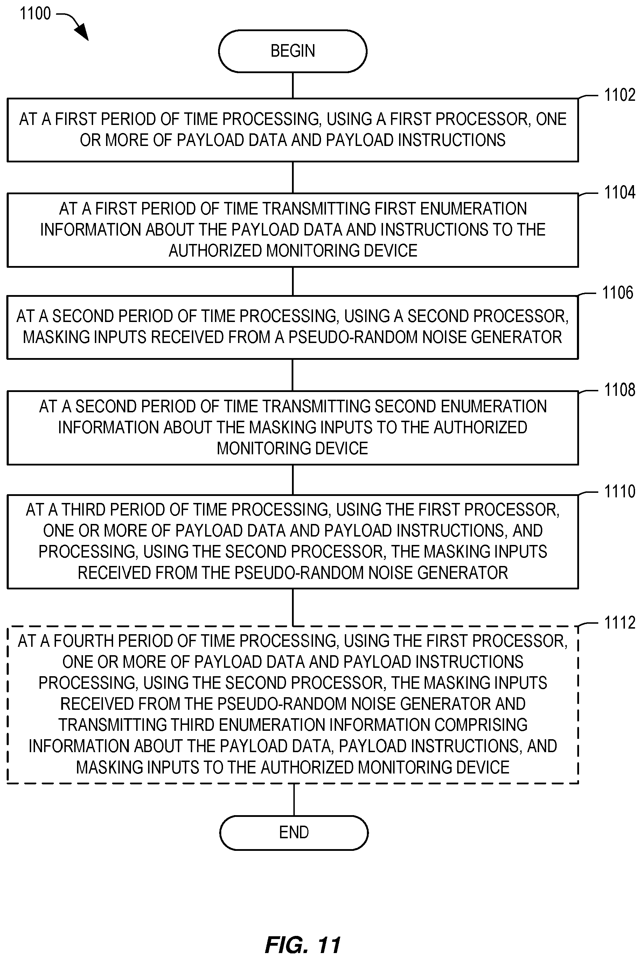

Turning now to Figure 11, illustrated is a method performed by the DuM 202 during a training phase that is monitored by an authorized monitoring device 204.

At 1102, at a first period of time, the DuM 202 processes, using a first processor (e.g., processing element 214), one or more of payload data and payload instructions.

At 1104, at a first period of time, the DuM 202 transmits first enumeration information about the payload data and instructions to the authorized monitoring device 204.

At 1106, at a second period of time, the DuM 202 processes, using a second processor, masking inputs received from a deterministic/probabilistic function 212.

At 1108, at the second period of time, the DuM 202 transmits second enumeration information about the masking inputs to the authorized monitoring device 204.

At 1110, at a third period of time, the DuM 202 processes, using the first processor 214, one or more of payload data and payload instructions, and processes, using the second processor 216, the masking inputs received from the deterministic/probabilistic function 212.

At 1112, at a fourth period of time, the DuM 202 can optionally process, using the first processor 214, one or more of payload data and payload instructions, and process, using the second processor 216, the masking inputs received from the deterministic/probabilistic function 212 and transmit third enumeration information comprising information about the payload data, payload instructions, and masking inputs to the authorized monitoring device 204.

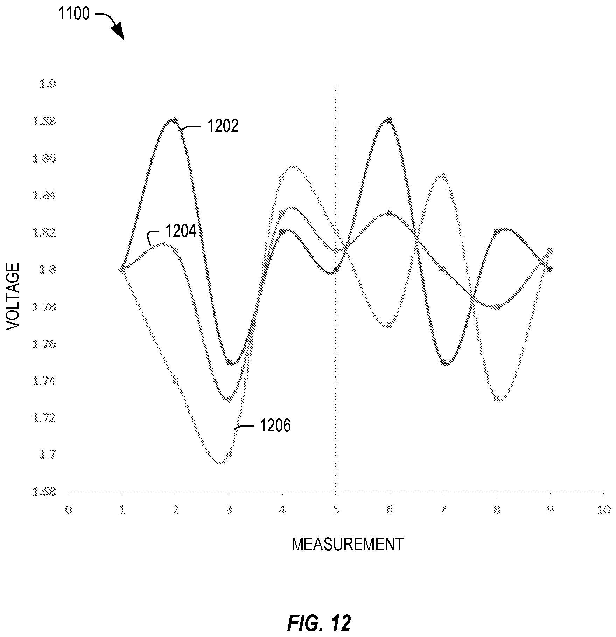

Turning now to Figure 12, illustrated is an exemplary graph depicting measurements of side-channel emissions in accordance with some embodiments of the present disclosure. In the graph, which graphs voltage over time, a first line 1202 corresponds to the payload side-channel emission 408 as detected by the authorized monitoring device 204. Line 1206 is the masking side-channel emission 504, whilst line 1204 is the combined side-channel emission 606.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

## Claims

1. A method implemented in an authorized monitoring device (204) for monitoring side-channel emissions of a Device under Monitoring, DuM, (202), the method comprising:
generating (906), via a deterministic/probabilistic function (226), known masking inputs, wherein an input to the deterministic/probabilistic function (226) is a function of a shared secret shared with the DuM (202) and a seed received from the DuM (202);
training (904) a filtering characteristic based on received masking side-channel emissions (504) during a filter training stage that correspond to the known masking inputs;
receiving (1002) a combined side-channel emission (606) from the DuM (202), wherein the combined side-channel emission (606) comprises a payload side-channel emission (408) and a masking side-channel emission (504);
filtering (1006) the combined side-channel emission (606) to determine the payload side-channel emission (408) based at least in part on the trained filtering characteristic that removes the masking side-channel emission (504) from the combined side-channel emission (606); and
determining (1008) an operational state (410) of the DuM (202) based on the payload side-channel emission (408).

2. The method of claim 1, wherein the determining (1008) the operational state of the DuM (202) is further based on a known status model.

3. The method of claim 2, further comprising:
training (902) the known status model based on received payload side-channel emissions (408) during a payload training stage that correspond to known operational states (410) of the DuM (202).

4. The method of any of claims 1-3, wherein the deterministic/probabilistic function (226) is at least one a Pseudo-Random Number Generator, a Hash function, a Message Authentication Code function, a Physically Unclonable Function, or a Key Derivation Function.

5. The method of any of claims 1-4, further comprising:
determining (908) the shared secret based on data extracted during the filter training stage.

6. The method of claim 5, wherein the data extracted is a result of challenges fed to the DuM (202).

7. The method of any of claims 1-6, further comprising:
converting (1004) the received combined side-channel emission (606) from a time domain signal to a frequency domain signal; and
filtering (1006) the frequency domain signal based on the known filtering characteristic.

8. The method of any of claims 1-7, further comprising:
receiving (1010) additional combined side-channel emissions (606) and information regarding corresponding operational states of the DuM (202); and
based on the additional combined side-channel emissions (606) and the information regarding corresponding operational states of the DuM (202), updating (1012) the known filtering characteristic.

9. The method of any of claims 1-8, wherein the combined side-channel emission (606) comprises at least one of power consumption of the DuM, timing of the DuM, a thermal emission, an electromagnetic emission, an electromagnetic field, or an audio emission.

10. An authorized monitoring device (204), comprising:
a memory that stores computer-executable instructions; and
a processor that executes the computer-executable instructions thereby causing the processor to:
generate (906), via a deterministic/probabilistic function (226), known masking inputs, wherein an input to the deterministic/probabilistic function (226) is a function of a shared secret shared with the DuM (202) and a seed received from the DuM (202);
train (904) a filtering characteristic based on received masking side-channel emissions (504) during a filter training stage that correspond to the known masking inputs;
receive (1002) a combined side-channel emission (606) from the DuM (202), wherein the combined side-channel emission (606) comprises a payload side-channel emission (408) and a masking side-channel emission (504);
filter (1006) the combined side-channel emission (606) to determine the payload side-channel emission (408) based at least in part on the trained filtering characteristic that removes the masking side-channel emission (504) from the combined side-channel emission (606); and
determine (1008) an operational state (410) of the DuM (202) based the payload side-channel emission (408).

11. The authorized monitoring device (204) of claim 10, wherein the computer-executable instructions cause the processor to perform the method of any of claims 2-9.

## Patentansprüche

1. Verfahren, das in einer autorisierten Überwachungsvorrichtung (204) implementiert wird, zum Überwachen von Seitenkanalemissionen einer Vorrichtung unter Überwachung, DuM, (202), wobei das Verfahren Folgendes umfasst:
Erzeugen (906), über eine deterministische/probabilistische Funktion (226), bekannter Maskierungseingaben, wobei eine Eingabe in die deterministische/probabilistische Funktion (226) eine Funktion eines mit der DuM (202) geteilten gemeinsamen Geheimnisses und eines von der DuM (202) empfangenen Startwerts ist;
Trainieren (904) einer Filtercharakteristik basierend auf empfangenen Maskierungs-Seitenkanalemissionen (504) während einer Filtertrainingsphase, die den bekannten Maskierungseingaben entsprechen;
Empfangen (1002) einer kombinierten Seitenkanalemission (606) von der DuM (202), wobei die kombinierte Seitenkanalemission (606) eine Nutzlast-Seitenkanalemission (408) und eine Maskierungs-Seitenkanalemission (504) umfasst;
Filtern (1006) der kombinierten Seitenkanalemission (606), um die Nutzlast-Seitenkanalemission (408) basierend mindestens teilweise auf der trainierten Filtercharakteristik, welche die Maskierungs-Seitenkanalemission (504) von der kombinierten Seitenkanalemission (606) entfernt, zu bestimmen; und
Bestimmen (1008) eines Betriebszustands (410) der DuM (202) basierend auf der Nutzlast-Seitenkanalemission (408).

2. Verfahren nach Anspruch 1, wobei das Bestimmen (1008) des Betriebszustands der DuM (202) ferner auf einem bekannten Statusmodell basiert.

3. Verfahren nach Anspruch 2, ferner umfassend:
Trainieren (902) des bekannten Statusmodells basierend auf den empfangenen Nutzlast-Seitenkanalemissionen (408) während einer Nutzlasttrainingsphase, die den bekannten Betriebszuständen (410) der DuM (202) entsprechen;

4. Verfahren nach einem der Ansprüche 1-3, wobei die deterministische/probabilistische Funktion (226) mindestens eines der Folgenden ist: ein Pseudozufallszahlengenerator, eine Hash-Funktion, eine Nachrichtenauthentifizierungscode-Funktion, eine physikalisch nicht klonbare Funktion oder eine Schlüsselableitungsfunktion.

5. Verfahren nach einem der Ansprüche 1-4, ferner umfassend:
Bestimmen (908) des gemeinsamen Geheimnisses basierend auf Daten, die während der Filtertrainingsphase extrahiert werden.

6. Verfahren nach Anspruch 5, wobei die extrahierten Daten ein Ergebnis von Herausforderungen sind, die der DuM (202) zugeführt wurden.

7. Verfahren nach einem der Ansprüche 1-6, ferner umfassend:
Umwandeln (1004) der empfangenen kombinierten Seitenkanalemission (606) von einem Zeitdomänensignal in ein Frequenzdomänensignal; und
Filtern (1006) des Frequenzdomänensignals basierend auf der bekannten Filtercharakteristik.

8. Verfahren nach einem der Ansprüche 1-7, ferner umfassend:
Empfangen (1010) zusätzlicher kombinierter Seitenkanalemissionen (606) und von Informationen in Bezug auf entsprechende Betriebszustände der DuM (202); und
basierend auf den zusätzlichen kombinierten Seitenkanalemissionen (606) und den Informationen in Bezug auf die entsprechenden Betriebszustände der DuM (202) Aktualisieren (1012) der bekannten Filtercharakteristik.

9. Verfahren nach einem der Ansprüche 1-8, wobei die kombinierte Seitenkanalemission (606) mindestens eines der Folgenden umfasst: Stromverbrauch der DuM, Zeitsteuerung der DuM, eine thermische Emission, eine elektromagnetische Emission, ein elektromagnetisches Feld oder eine Audioemission.

10. Autorisierte Überwachungsvorrichtung (204), umfassend:
einen Speicher, der computerausführbare Anweisungen speichert; und
einen Prozessor, der die computerausführbaren Anweisungen ausführt und dadurch den
Prozessor zu Folgendem veranlasst:
Erzeugen (906), über eine deterministische/probabilistische Funktion (226), bekannter Maskierungseingaben, wobei eine Eingabe in die deterministische/probabilistische Funktion (226) eine Funktion eines mit der DuM (202) geteilten gemeinsamen Geheimnisses und eines von der DuM (202) empfangenen Startwerts ist;
Trainieren (904) einer Filtercharakteristik basierend auf empfangenen Maskierungs-Seitenkanalemissionen (504) während einer Filtertrainingsphase, die den bekannten Maskierungseingaben entsprechen;
Empfangen (1002) einer kombinierten Seitenkanalemission (606) von der DuM (202), wobei die kombinierte Seitenkanalemission (606) eine Nutzlast-Seitenkanalemission (408) und eine Maskierungs-Seitenkanalemission (504) umfasst;
Filtern (1006) der kombinierten Seitenkanalemission (606), um die Nutzlast-Seitenkanalemission (408) basierend mindestens teilweise auf der trainierten Filtercharakteristik, welche die Maskierungs-Seitenkanalemission (504) von der kombinierten Seitenkanalemission (606) entfernt, zu bestimmen; und
Bestimmen (1008) eines Betriebszustands (410) der DuM (202) basierend der Nutzlast-Seitenkanalemission (408).

11. Autorisierte Überwachungsvorrichtung (204) nach Anspruch 10, wobei die computerausführbaren Anweisungen den Prozessor dazu veranlassen das Verfahren nach einem der Ansprüche 2-9 durchzuführen.

## Revendications

1. Procédé mis en œuvre dans un dispositif de surveillance autorisé (204) pour surveiller des émissions de canal latéral d'un dispositif sous surveillance, DuM, (202), le procédé comprenant :
la génération (906), via une fonction déterministe/probabiliste (226), d'entrées de masquage connues, dans lequel une entrée de la fonction déterministe/probabiliste (226) est une fonction d'un secret partagé avec le DuM (202) et d'une graine reçue en provenance du DuM (202) ;
l'apprentissage (904) d'une caractéristique de filtrage sur la base d'émissions de canal latéral de masquage (504) reçues pendant une étape d'apprentissage de filtre qui correspondent aux entrées de masquage connues ;
la réception (1002) d'une émission de canal latéral combinée (606) provenant du DuM (202), dans lequel l'émission de canal latéral combinée (606) comprend une émission de canal latéral de charge utile (408) et une émission de canal latéral de masquage (504) ;
le filtrage (1006) de l'émission de canal latéral combinée (606) pour déterminer l'émission de canal latéral de charge utile (408) sur la base au moins en partie de la caractéristique de filtrage ayant fait l'objet d'un apprentissage qui supprime l'émission de canal latéral de masquage (504) de l'émission de canal latéral combinée (606) ; et
la détermination (1008) d'un état opérationnel (410) du DuM (202) sur la base de l'émission de canal latéral de charge utile (408).

2. Procédé selon la revendication 1, dans lequel la détermination (1008) de l'état opérationnel du DuM (202) est en outre basée sur un modèle d'état connu.

3. Procédé selon la revendication 2, comprenant en outre :
l'apprentissage (902) du modèle d'état connu sur la base d'émissions de canal latéral de charge utile (408) reçues pendant une étape d'apprentissage de charge utile qui correspondent à des états opérationnels (410) connus du DuM (202).

4. Procédé selon l'une quelconque des revendications 1 à 3, dans lequel la fonction déterministe/probabiliste (226) est au moins l'un parmi un générateur de nombres pseudo-aléatoires, une fonction de hachage, une fonction de code d'authentification de message, une fonction physiquement inclonable, ou une fonction de dérivation de clé.

5. Procédé selon l'une quelconque des revendications 1 à 4, comprenant en outre :
la détermination (908) du secret partagé sur la base de données extraites pendant l'étape d'apprentissage de filtre.

6. Procédé selon la revendication 5, dans lequel les données extraites sont un résultat de défis soumis au DuM (202).

7. Procédé selon l'une quelconque des revendications 1 à 6, comprenant en outre :
la conversion (1004) de l'émission de canal latéral combinée (606) reçue d'un signal de domaine temporel en un signal de domaine fréquentiel ; et
le filtrage (1006) du signal de domaine fréquentiel sur la base de la caractéristique de filtrage connue.

8. Procédé selon l'une quelconque des revendications 1 à 7, comprenant en outre :
la réception (1010) d'émissions de canal latéral combinées (606) supplémentaires et d'informations concernant des états opérationnels correspondants du DuM (202) ; et
sur la base des émissions de canal latéral combinées (606) supplémentaires et des informations concernant des états opérationnels correspondants du DuM (202), la mise à jour (1012) de la caractéristique de filtrage connue.

9. Procédé selon l'une quelconque des revendications 1 à 8, dans lequel l'émission de canal latéral combinée (606) comprend au moins un parmi une consommation d'énergie du DuM, une synchronisation du DuM, une émission thermique, une émission électromagnétique, un champ électromagnétique, ou une émission audio.

10. Dispositif de surveillance autorisé (204), comprenant :
une mémoire qui stocke des instructions exécutables par ordinateur ; et
un processeur qui exécute les instructions exécutables par ordinateur, amenant ainsi le processeur à :
générer (906), via une fonction déterministe/probabiliste (226), des entrées de masquage connues, dans lequel une entrée de la fonction déterministe/probabiliste (226) est une fonction d'un secret partagé avec le DuM (202) et d'une graine reçue en provenance du DuM (202) ;
réaliser l'apprentissage (904) d'une caractéristique de filtrage sur la base d'émissions de canal latéral de masquage (504) reçues pendant une étape d'apprentissage de filtre qui correspondent aux entrées de masquage connues ;
recevoir (1002) une émission de canal latéral combinée (606) provenant du DuM (202), dans lequel l'émission de canal latéral combinée (606) comprend une émission de canal latéral de charge utile (408) et une émission de canal latéral de masquage (504) ;
filtrer (1006) l'émission de canal latéral combinée (606) pour déterminer l'émission de canal latéral de charge utile (408) sur la base au moins en partie de la caractéristique de filtrage ayant fait l'objet d'un apprentissage qui supprime l'émission de canal latéral de masquage (504) de l'émission de canal latéral combinée (606) ; et
déterminer (1008) un état opérationnel (410) du DuM (202) sur la base de l'émission de canal latéral de charge utile (408).

11. Dispositif de surveillance autorisé (204) selon la revendication 10, dans lequel les instructions exécutables par ordinateur amènent le processeur à réaliser le procédé selon l'une quelconque des revendications 2 à 9.
